# EUROPEAN PATENT APPLICATION

(11) **EP 4 822 790 A1**
(43) Date of publication of application: **14.10.2026**
(21) Application number: 24921379.4
(22) Date of filing: 19.08.2024
(51) Int. Cl.: H01M 10/04, H01M 50/531, H01M 50/59, B41F 15/08

(54) **ADHESIVE TAPE ATTACHMENT SYSTEM, ADHESIVE TAPE ATTACHMENT METHOD, AND BATTERY PRODUCTION LINE**

(30) Priority: 30.01.2024 CN 202410123259
(71) Applicant: Contemporary Amperex Technology Co., Limited, Ningde, Fujian 352100 (CN)
(72) Inventor: WANG, Tengteng, Ningde, Fujian 352100 (CN); YANG, Kun, Ningde, Fujian 352100 (CN); FAN, Xiang, Ningde, Fujian 352100 (CN)
(74) Representative: Ran, Handong
(86) International application number: PCT/CN2024/113170
(87) International publication number: WO 2025/161353

(57) **Abstract**

Embodiments of the present disclosure relate to the technical field of batteries, and provide an adhesive tape attachment system, an adhesive tape attachment method, and a battery production line. The adhesive tape attachment system is provided with an assistance station for feeding and discharging, and the adhesive tape attachment system comprises adhesive tape attachment components and a transverse moving mechanism. The adhesive tape attachment components are each provided with an adhesive tape attachment position for adhesive tape attachment, and the number of the adhesive tape attachment components is two; the adhesive tape attachment positions of a plurality of adhesive tape attachment components are arranged in a first direction; the assistance station is arranged between at least two adjacent adhesive tape attachment components; among the two adjacent adhesive tape attachment components corresponding to the assistance station, the adhesive tape attachment position of one adhesive tape attachment component is a first adhesive tape attachment position, and the adhesive tape attachment position of the other adhesive tape attachment component is a second adhesive tape attachment position. The transverse moving mechanism is provided with two accommodating regions arranged in the first direction, and the transverse moving mechanism moves in the first direction, so as to drive one accommodating region to be switched between the first adhesive tape attachment position and the assistance station, and drive the other accommodating region to be switched between the second adhesive tape attachment position and the assistance station.

## Description

### CROSS-REFERENCE TO RELATED APPLICATIONS

The present disclosure is based on and claims priority to the Chinese Patent Application No. 202410123259.9, filed on January 30, 2024 and entitled "ADHESIVE TAPE ATTACHING SYSTEM, ADHESIVE TAPE ATTACHING METHOD, AND BATTERY PRODUCTION LINE", which is incorporated herein by reference in its entirety.

### TECHNICAL FIELD

The present disclosure relates to the field of battery technologies, and specifically, to an adhesive tape attaching system, an adhesive tape attaching method, and a battery production line.

### BACKGROUND

The application of new energy batteries in both daily life and industry is becoming increasingly widespread. For example, new energy vehicles equipped with batteries have been widely used, and batteries are also increasingly applied in the field of energy storage, among others.

During the production process of a cell, welding is required at tabs of the cell, mainly using metal ultrasonic welding. Adhesive tape attachment is required at the tabs after ultrasonic welding. However, traditional adhesive tape preparation mechanisms for adhesive tape attachment often have the problem of a slower adhesive tape attachment cycle.

### SUMMARY

In view of this, embodiments of the present disclosure expect to provide an adhesive tape attaching system, an adhesive tape attaching method, and a battery production line, aiming to accelerate the adhesive tape attachment cycle speed of the adhesive tape attaching system.

To achieve the above object, the technical solutions of the embodiments of the present disclosure are implemented as follows:

An embodiment of the present disclosure provides an adhesive tape attaching system having an auxiliary station for loading and unloading, where the adhesive tape attaching system includes:
an adhesive tape attaching assembly having an adhesive tape attachment position for adhesive tape attachment, where at least two adhesive tape attaching assemblies are provided, an arrangement direction of adhesive tape attachment positions of a plurality of adhesive tape attaching assemblies is a first direction, the auxiliary station is provided between at least two adjacent adhesive tape attaching assemblies, and among two adjacent adhesive tape attaching assemblies corresponding to the auxiliary station, the adhesive tape attachment position of one adhesive tape attaching assembly is a first adhesive tape attachment position, and the adhesive tape attachment position of the other adhesive tape attaching assembly is a second adhesive tape attachment position; and
a traversing mechanism having two accommodating areas arranged along the first direction, where the accommodating areas are used for placing bare cells to be attached, and the traversing mechanism moves along the first direction to drive one of the accommodating areas to switch between the first adhesive tape attachment position and the auxiliary station, and to drive the other accommodating area to switch between the second adhesive tape attachment position and the auxiliary station.

In the embodiment of the present disclosure, both accommodating areas can follow the traversing mechanism to move along the first direction, one accommodating area can move to the corresponding adhesive tape attachment position, and the other accommodating area can move to the auxiliary station. This can fully utilize the adhesive tape attachment time of the bare cells in the accommodating area located at the corresponding adhesive tape attachment position to perform loading or unloading on the bare cells in the accommodating area located at the auxiliary station, reducing the waiting time of the bare cells for adhesive tape attachment, which is conducive to accelerating the adhesive tape attachment cycle speed of the adhesive tape attaching system.

In one embodiment, in the two accommodating areas, one accommodating area is stationary relative to the other accommodating area. When one accommodating area is located at the corresponding adhesive tape attachment position, the other accommodating area is located at the auxiliary station.

In the embodiment of the present disclosure, one accommodating area can move synchronously with the other accommodating area. When a pair of bare cells in one accommodating area move to the corresponding adhesive tape attachment position for adhesive tape attachment, the other accommodating area can also synchronously move to the auxiliary station for loading or unloading, further reducing the waiting time of the bare cells for adhesive tape attachment, which is conducive to accelerating the adhesive tape attachment cycle speed of the adhesive tape attaching system.

In one embodiment, the adhesive tape attaching system further includes a detection assembly, the detection assembly is located along the first direction between the first adhesive tape attachment position and the second adhesive tape attachment position, and the detection assembly is configured to detect the bare cells in the accommodating area located at the auxiliary station.

In the embodiment of the present disclosure, after the accommodating area located at the auxiliary station is loaded, the detection assembly can detect the pair of bare cells and reject unqualified bare cells. After the detection result of the bare cells is qualified, adhesive tape attachment is performed on the bare cells, avoiding waste of adhesive tape attachment time and adhesive tape resources, which is conducive to improving adhesive tape attachment efficiency.

In one embodiment, the detection assembly has a detection portion, the traversing mechanism has an avoidance hole communicating with the corresponding accommodating area, the detection portion is located below the avoidance hole, a projection area along a vertical direction of the avoidance hole corresponding to the accommodating area located at the auxiliary station is a first area, a projection area along the vertical direction of the detection portion is a second area, and the second area is located within the first area, so that the detection portion can detect a welding state of an adapting piece through the avoidance hole corresponding to the accommodating area located at the auxiliary station.

In the embodiment of the present disclosure, since the adapting piece is located below a tab of the bare cell and a thickness of the adapting piece is thicker than a thickness of the tab of the bare cell, if the thicker adapting piece can be successfully welded through the thinner tab, it can be determined that the welding quality between the adapting piece and the tab is qualified. Therefore, the detection portion only needs to be located below the avoidance hole and can detect the welding state below the adapting piece through the avoidance hole, so as to determine whether the welding quality of the bare cell is qualified, without providing the detection portion above the adapting piece, which is conducive to improving detection efficiency and saving internal space of the adhesive tape attaching system.

In one embodiment, the adhesive tape attaching assembly has a first adhesive tape preparation position and a second adhesive tape preparation position, the first adhesive tape preparation position and the second adhesive tape preparation position are respectively used for acquiring adhesive tapes with different directions of adhesion sides, an arrangement direction of the first adhesive tape preparation position and the second adhesive tape preparation position is a second direction, and the adhesive tape attachment position is located along the second direction between the corresponding first adhesive tape preparation position and the corresponding second adhesive tape preparation position.

In the embodiment of the present disclosure, the pair of bare cells in the accommodating area located at the adhesive tape attachment position are subjected to adhesive tape attachment, the first adhesive tape attachment position and the second adhesive tape attachment position corresponding to the accommodating area located at the auxiliary station can acquire adhesive tapes with different directions of adhesion sides, fully utilizing the adhesive tape attachment time of the bare cells in the accommodating area located at the adhesive tape attachment position, which is conducive to accelerating the adhesive tape attachment cycle speed of the adhesive tape attaching system.

In one embodiment, two adhesive tape attaching assemblies are provided, the two adhesive tape attaching assemblies are arranged opposite to each other, and the auxiliary station and one traversing mechanism are both located between the two adhesive tape attaching assemblies.

In the embodiment of the present disclosure, a traversing mechanism is provided in the two adhesive tape attaching assemblies. One accommodating area is located at the adhesive tape attachment position for adhesive tape attachment, the other accommodating area is located at the auxiliary station for loading and unloading, and adhesive tape preparation is performed at the first adhesive tape preparation position and the second adhesive tape preparation position corresponding to the accommodating area located at the auxiliary station, all without mutual interference. This allows the loading or unloading of the accommodating area located at the auxiliary station, and the adhesive tape preparation at the first adhesive tape preparation position and the second adhesive tape preparation position corresponding to the accommodating area located at the auxiliary station fully utilizes the adhesive tape attachment time of the pair of bare cells in the accommodating area located at the adhesive tape attachment position, which is conducive to accelerating the adhesive tape attachment cycle speed of the adhesive tape attaching system.

In one embodiment, the adhesive tape attaching assembly includes an adhesive tape attaching apparatus, the adhesive tape attaching apparatus includes a first adhesive tape attaching member, a second adhesive tape attaching member, a guide shaft, and an elastic member, one of the first adhesive tape attaching member and the second adhesive tape attaching member is connected to the guide shaft, the other of the first adhesive tape attaching member and the second adhesive tape attaching member is movably provided on the guide shaft, the elastic member is sleeved on the guide shaft, and the elastic member is in contact with the first adhesive tape attaching member and the second adhesive tape attaching member, respectively.

In the embodiment of the present disclosure, one end of the guide shaft is connected to a lower bottom surface of a top of the second adhesive tape attaching member, and another end is connected to an upper top surface of the first adhesive tape attaching member, and the elastic member is sleeved on the guide shaft, so that the first adhesive tape attaching member can move along an axial direction of the guide shaft, ensuring that the adhesive tape can be completely and densely attached to the tab and a side of the bare cell close to the tab.

In one embodiment, the first adhesive tape attaching member has a first limiting portion and a first adhesive tape pressing surface for pressing the adhesive tape, the second adhesive tape attaching member has a second limiting portion and a second adhesive tape pressing surface for pressing the adhesive tape, the first limiting portion is configured to abut against the second limiting portion to limit movement of the first adhesive tape attaching member and the second adhesive tape attaching member under an elastic force of the elastic member, and when the first limiting portion and the second limiting portion abut against each other, the first adhesive tape pressing surface and the second adhesive tape pressing surface are flush with each other.

In the embodiment of the present disclosure, the first adhesive tape pressing surface and the second adhesive tape pressing surface are flush with each other, so that the adhesive tape can be flatly adsorbed on the adhesive tape attaching apparatus, which is conducive to reducing difficulty in adhesive tape suction of the adhesive tape attaching apparatus at the corresponding adhesive tape preparation position.

An embodiment of the present disclosure further provides an adhesive tape attaching method, including:
driving, by a traversing mechanism, one accommodating area along a first direction to move from an auxiliary station between two adhesive tape attaching assemblies to an adhesive tape attachment position of one of the adhesive tape attaching assemblies, where the first direction is an arrangement direction of adhesive tape attachment positions of a plurality of the adhesive tape attaching assemblies; and
performing, by the adhesive tape attaching assembly, adhesive tape attachment on bare cells in the accommodating area located at the corresponding adhesive tape attachment position; where
before the bare cells in the accommodating area located at the corresponding adhesive tape attachment position complete adhesive tape attachment, the other accommodating area is capable of moving from the adhesive tape attachment position of the other adhesive tape attaching assembly to the auxiliary station, so that the bare cells can be loaded into the accommodating area corresponding to the auxiliary station or unloaded from the accommodating area corresponding to the auxiliary station, and the two accommodating areas of the traversing mechanism are arranged along the first direction.

In the embodiment of the present disclosure, when the two accommodating areas are switched between the adhesive tape attachment position and the auxiliary station, so that when one accommodating area is located at the corresponding adhesive tape attachment position, the other accommodating area is located at the auxiliary station, which can fully utilize the adhesive tape attachment time of the bare cells in the accommodating area located at the corresponding adhesive tape attachment position to perform loading or unloading on the bare cells in the accommodating area located at the auxiliary station, which is conducive to accelerating the adhesive tape attachment cycle speed of the adhesive tape attaching assembly.

In one embodiment, the adhesive tape attaching assembly includes an adhesive tape attaching apparatus, and the adhesive tape attaching method further includes:
when one of the accommodating areas is located at the corresponding adhesive tape attachment position, performing adhesive tape preparation on the adhesive tape attaching apparatus of the adhesive tape attaching assembly corresponding to the other accommodating area.

In the embodiment of the present disclosure, the traversing mechanism is moved to move one accommodating area to the corresponding adhesive tape attachment position, the corresponding adhesive tape attaching apparatus also moves to the corresponding adhesive tape attachment position, the other accommodating area moves to the auxiliary station, and the corresponding adhesive tape attaching apparatus moves to the corresponding adhesive tape preparation position for adhesive tape preparation. This enables the adhesive tape attaching system to fully utilize the adhesive tape attachment time of a pair of bare cells to perform adhesive tape preparation for another pair of bare cells, which is conducive to accelerating the adhesive tape attachment cycle speed of the adhesive tape attaching system.

In one embodiment, an adapting piece corresponding to the bare cells in the accommodating area is detected by a detection assembly, and the adhesive tape attaching method further includes:
detecting, by the detection assembly, the adapting piece corresponding to the bare cells in the accommodating area located at the auxiliary station when one of the accommodating areas is located at the corresponding adhesive tape attachment position.

In the embodiment of the present disclosure, the traversing mechanism is moved to move one accommodating area to the corresponding adhesive tape attachment position, the corresponding adhesive tape attaching apparatus also moves to the corresponding adhesive tape attachment position, the other accommodating area moves to the auxiliary station, and the detection assembly detects the bare cells in the accommodating area located at the auxiliary station. Adhesive tape preparation is performed at the corresponding adhesive tape preparation position by the corresponding adhesive tape attaching apparatus after detection, avoiding waste of adhesive tape resources and adhesive tape attachment time.

In one embodiment, the detection assembly has a detection portion, and the traversing mechanism has an avoidance hole; where
the detecting, by the detection assembly, the adapting piece corresponding to the bare cells in the accommodating area located at the auxiliary station when one of the accommodating areas is located at the corresponding adhesive tape attachment position includes:
detecting, by the detection portion through the avoidance hole, a welding state of the adapting piece in the accommodating area located at the auxiliary station when one of the accommodating areas is located at the corresponding adhesive tape attachment position.

A pair of bare cells are placed in the accommodating area located at the auxiliary station, and the detection portion detects a weld seam of the adapting piece through the avoidance hole, and then determines whether to reject the pair of bare cells according to the quality of the weld seam of the adapting piece.

An embodiment of the present disclosure further provides a battery production line, including:
the adhesive tape attaching system according to any one of the foregoing embodiments;
a loading mechanism, configured to place welded bare cells and an adapting piece into the accommodating area at the auxiliary station; and
an unloading mechanism, configured to remove the bare cells and the adapting piece that have completed adhesive tape attachment from the accommodating area at the auxiliary station.

In the embodiment of the present disclosure, the loading mechanism is configured to place a pair of welded bare cells into the accommodating area at the auxiliary station, and the unloading mechanism is configured to remove a pair of bare cells that have completed adhesive tape attachment from the accommodating area at the auxiliary station, which is conducive to improving the production efficiency of a battery.

### Invention effect

In the adhesive tape attaching system provided by the embodiment of the present disclosure, the two accommodating areas of the traversing mechanism can both move back and forth along the first direction, and when one accommodating area moves to the corresponding adhesive tape attachment position, the other accommodating area can move to the auxiliary station, so that when the bare cells are subjected to adhesive tape attachment, the adhesive tape attaching system can perform preparation work before adhesive tape attachment for another bare cell, which is conducive to accelerating the adhesive tape attachment cycle speed of the adhesive tape attaching system.

### BRIEF DESCRIPTION OF DRAWINGS

FIG. 1 is a schematic diagram of an adhesive tape attaching system at a certain angle in an embodiment of the present disclosure;
FIG. 2 is an enlarged view of position A in FIG. 1;
FIG. 3 is a schematic structural diagram of a traversing mechanism at a certain angle in an embodiment of the present disclosure;
FIG. 4 is a schematic top view of an adhesive tape attaching system in an embodiment of the present disclosure;
FIG. 5 is a schematic side view of an adhesive tape attaching system along a second direction in an embodiment of the present disclosure;
FIG. 6 is a schematic structural diagram of a bare cell at a certain angle in an embodiment of the present disclosure; and
FIG. 7 is a schematic flowchart of an adhesive tape attaching method in an embodiment of the present disclosure.

### Reference signs

1. adhesive tape attaching system; 1a. auxiliary station; 11. adhesive tape attaching assembly; 111. adhesive tape attaching apparatus; 1111. first adhesive tape attaching member; 11111. first limiting portion; 1111a. first adhesive tape pressing surface; 1112. second adhesive tape attaching member; 11121. second limiting portion; 1112a. second adhesive tape pressing surface; 1114. elastic member; 11a1. first adhesive tape attachment position; 11a2. second adhesive tape attachment position; 11b1. first adhesive tape preparation position; 11b2. second adhesive tape preparation position; 112. driving assembly; 1121. first driving member; 1122. second driving member; 12. traversing mechanism; 12a. accommodating area; 12b. avoidance hole; 13. bare cell; 131. tab; 132. adapting piece; 14. detection assembly; and 141. detection portion.

### DESCRIPTION OF EMBODIMENTS

The following will describe the embodiments of the technical solutions of the present disclosure in detail with reference to the accompanying drawings. The following embodiments are only used to more clearly illustrate the technical solutions of the present disclosure, and therefore are used as just examples which do not constitute any limitations on the protection scope of the present disclosure.

Unless otherwise defined, all technical and scientific terms used herein shall have the same meanings as commonly understood by persons skilled in the art to which the present disclosure relates. The terms used herein are intended to merely describe the specific embodiments rather than to limit the present disclosure. The terms "include", "comprise", "have", and any other variations thereof in the embodiments of the present disclosure are intended to cover non-exclusive inclusions.

In the description of the embodiments of the present disclosure, the technical terms "first", "second", "third", and the like are only used to distinguish different objects, and shall not be understood as any indication or implication of relative importance or any implicit indication of the number, specific sequence, or primary-secondary relationship of the technical features indicated. In the description of the embodiments of the present disclosure, "a plurality of" means more than two, unless otherwise specifically defined.

In this specification, "embodiment" means that specific features, structures, or characteristics described with reference to the embodiment may be included in at least one embodiment of the present disclosure. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of the present disclosure, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of the foregoing terms in the embodiments of the present disclosure as appropriate to specific situations.

In the description of the embodiments of the present disclosure, unless otherwise specified and defined explicitly, the technical term "contact" should be understood in a general sense, which can be direct contact or contact through an intermediate medium layer, can be contact with essentially no interaction force between the two contacting parties, or can be contact with interaction force between the two contacting parties.

As part of the inventive concept of the present disclosure, before describing the embodiments of the present disclosure, the reasons for the slower adhesive tape attachment cycle of the adhesive tape attaching system in the related art need to be analyzed, and the technical solutions of the embodiments of the present disclosure are obtained through reasonable analysis.

The adhesive tape attachment process of bare cells is divided into: loading, adhesive tape preparation, adhesive tape attachment, and unloading. In the related art, the adhesive tape attachment sequence of traditional adhesive tape preparation mechanisms is generally that after a pair of welded bare cells are subjected to adhesive tape attachment and unloaded, the next pair of welded bare cells can start loading for adhesive tape attachment, so that the waiting time for adhesive tape attachment of the next pair of welded bare cells is longer, and the adhesive tape attachment cycle speed of the adhesive tape attachment mechanism is slower.

For example, a pair of welded bare cells are placed in an adhesive tape attaching system, after the adhesive tape attaching system completes adhesive tape preparation, adhesive tape attachment starts, after the bare cells that have been subjected to adhesive tape attachment are removed, the next pair of welded bare cells to be attached are placed in the adhesive tape attaching system.

If the adhesive tape attachment time of the previous bare cell can be fully utilized to load and prepare the adhesive tape for the next bare cell to be attached in advance, the adhesive tape attachment cycle speed of the adhesive tape attaching system can be effectively accelerated. Therefore, in the adhesive tape attaching system of the embodiment of the present disclosure, by moving the traversing mechanism between the first adhesive tape attachment position, the second adhesive tape attachment position, and the auxiliary station, a pair of welded bare cells are subjected to adhesive tape attachment at the corresponding adhesive tape attachment position, and another bare cell to be attached can also be loaded at the auxiliary station and adhesive tape preparation can be performed thereon, the above three actions do not affect each other, effectively utilizing the adhesive tape attachment time of the previous bare cell, which is conducive to accelerating the adhesive tape attachment cycle speed of the adhesive tape attaching system.

The solutions of the embodiments of the present disclosure can be, but are not limited to, applied to a pair of welded bare cells, a battery cell, a battery module including the battery cell, or a battery pack including the battery cell or battery module. By moving the traversing mechanism between the first adhesive tape attachment position, the second adhesive tape attachment position, and the auxiliary station, a pair of welded bare cells are subjected to adhesive tape attachment at the corresponding adhesive tape attachment position, and another bare cell to be attached can also be loaded at the auxiliary station and adhesive tape preparation can be performed thereon, effectively accelerating the adhesive tape attachment cycle speed of the adhesive tape attaching system. In addition, the adhesive tape attachment efficiency of the battery cell in the battery pack is also improved.

In the battery pack of the embodiment of the present disclosure, the battery pack may include a box body and a battery cell, and the battery cell is located in the box body.

The box body refers to a structure having an accommodating space, the battery cell is located in the box body, and the battery cell of the battery pack is accommodated by the box body.

Multiple battery cells may be provided, and the multiple battery cells can be connected in series, parallel, or series-parallel, where being connected in series-parallel means a combination of series and parallel connections of the multiple battery cells. The multiple battery cells may be directly connected in series, parallel, or series-parallel, and then an entirety of the multiple battery cells is placed in the box body. Certainly, the multiple battery cells may also be formed by a plurality of battery cells being connected in series, parallel, or series-parallel first to form a battery module, and then the multiple battery modules being connected in series, parallel, or series-parallel to form an entirety which is placed in the box body. The battery pack may also include other structures. For example, the battery pack may also include a busbar configured to implement electrical connection between the multiple battery cells.

The battery cell refers to a unit capable of achieving mutual conversion between chemical energy and electrical energy.

In the embodiment of the present disclosure, the battery cell may be a secondary battery, and the secondary battery refers to a battery cell whose active material can be activated for continuous use through charging after the battery is discharged.

In the embodiment of the present disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead storage battery, and the like. This is not limited in the embodiment of the present disclosure.

The battery cell includes a housing, poles, an adapting piece, and a bare cell, where the bare cell welded to the adapting piece is located in the housing, and the adapting piece is electrically connected to the poles. Before the bare cell is placed into the housing, the bare cell is first welded to the adapting piece, and the welded bare cell and adapting piece are bonded by an adhesive tape, so that the tab of the bare cell is connected to the adapting piece more firmly.

The bare cell includes a positive electrode plate, a negative electrode plate, and a separator, the housing may be a sealed structure or a non-sealed structure. As an example, the housing is a non-sealed structure, the housing protects the bare cell. The battery cell further includes a sealing bag, the sealing bag is located between the housing and the bare cell, and the sealing bag is configured to package the bare cell. Specifically, the sealing bag can be a bag-shaped insulator or an aluminum-plastic film.

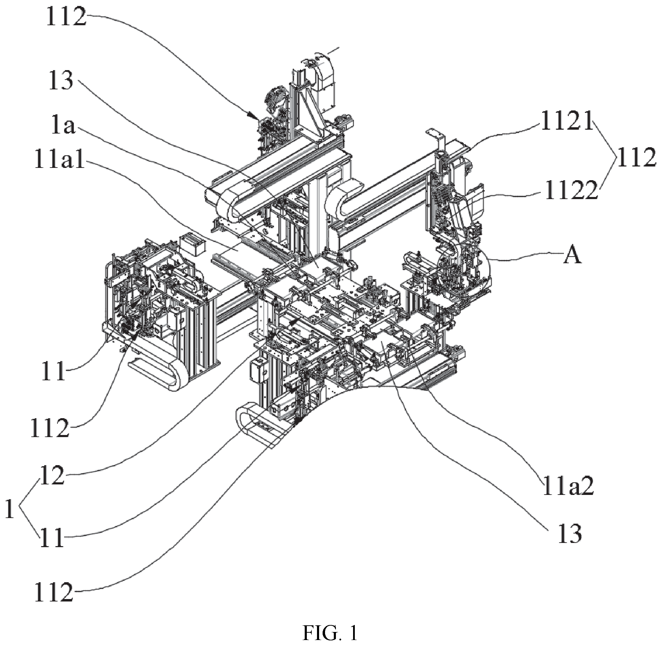

In view of this, referring to FIGs. 1, 3, and 4, an embodiment of the present disclosure provides an adhesive tape attaching system 1 having an auxiliary station 1a for loading and unloading, the adhesive tape attaching system 1 including an adhesive tape attaching assembly 11 and a traversing mechanism 12. The adhesive tape attaching assembly 11 has an adhesive tape attachment position for adhesive tape attachment, where at least two adhesive tape attaching assemblies 11 are provided, an arrangement direction of adhesive tape attachment positions of a plurality of adhesive tape attaching assemblies 11 is a first direction, the auxiliary station 1a is provided between at least two adjacent adhesive tape attaching assemblies 11, and among two adjacent adhesive tape attaching assemblies 11 corresponding to the auxiliary station 1a, the adhesive tape attachment position of one adhesive tape attaching assembly 11 is a first adhesive tape attachment position 11a1, and the adhesive tape attachment position of the other adhesive tape attaching assembly 11 is a second adhesive tape attachment position 11a2. A traversing mechanism 12 has two accommodating areas 12a arranged along the first direction, the accommodating areas 12a are used for placing bare cells 13 to be attached, the traversing mechanism 12 moves along the first direction to drive one of the accommodating areas 12a to switch between the first adhesive tape attachment position 11a1 and the auxiliary station 1a, and to drive the other accommodating area 12a to switch between the second adhesive tape attachment position 11a2 and the auxiliary station 1a.

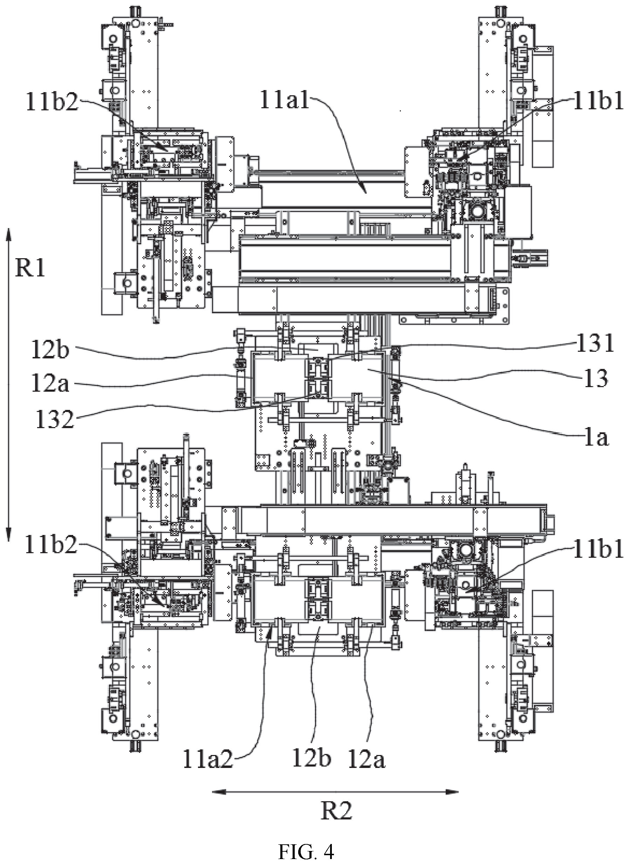

It should be noted that the direction shown by R1 in FIG. 4 is the first direction.

The adhesive tape attaching assembly 11 refers to a structure in the adhesive tape attaching system 1 that performs an adhesive tape attachment action on the bare cell 13, and can completely and densely attach an adhesive tape to a portion to be attached of the bare cell 13 to be attached.

For example, referring to FIG. 1, two adhesive tape attaching assemblies 11 may be provided, and the two adhesive tape attaching assemblies 11 correspond to one traversing mechanism 12.

For example, more than two adhesive tape attaching assemblies 11 may be provided. For example, three, four, or seven adhesive tape attaching assemblies 11 may be provided.

For example, more than two adhesive tape attaching assemblies 11 may be provided, every two adjacent adhesive tape attaching assemblies 11 are provided with the auxiliary station 1a, and every two adjacent adhesive tape attaching assemblies 11 correspond to one traversing mechanism 12.

The traversing mechanism 12 is a main structure that drives the accommodating areas 12a to switch between the first adhesive tape attachment position 11a1, the second adhesive tape attachment position 11a2, and the auxiliary station 1a.

For example, the traversing mechanism 12 reciprocates along the first direction.

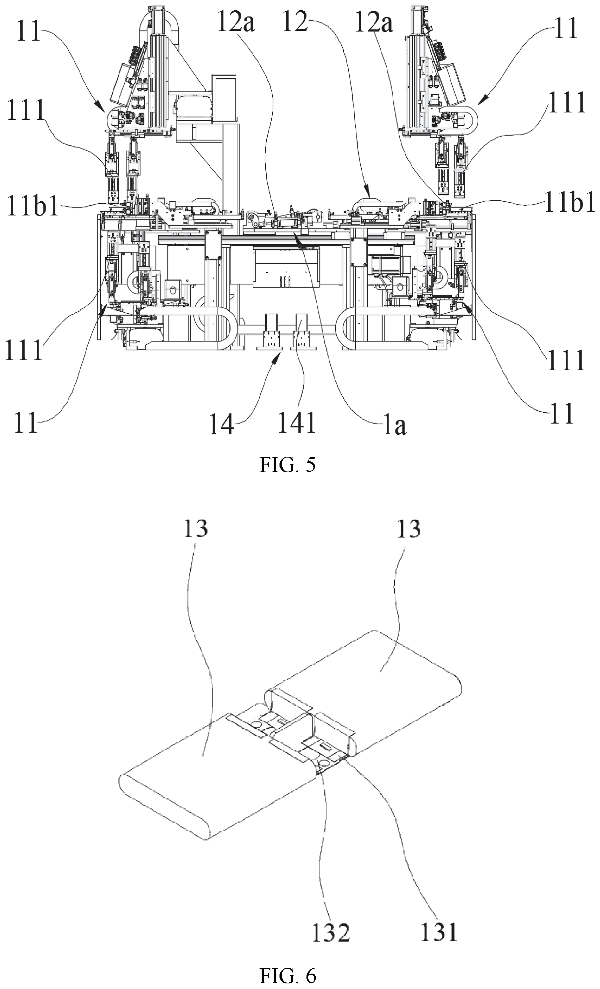

Referring to FIG. 6, the bare cells 13 are the pair of welded bare cells 13, and the two bare cells 13 are arranged opposite to each other on a side close to tabs 131 and connected by an adapting piece 132. For example, the bare cell 13 to be attached is a bare cell 13 welded to the adapting piece 132.

For example, tabs 131 of two bare cells 13 in one pair are welded to the adapting piece 132.

For example, adhesive tape attachment is performed on the bare cell 13, and an adhesive sheet may be spanned across the bare cell 13 and the adapting piece 132.

In the embodiment of the present disclosure, both accommodating areas 12a can follow the traversing mechanism 12 to move along the first direction, one accommodating area 12a can move to the corresponding adhesive tape attachment position, and the other accommodating area 12a can move to the auxiliary station 1a. This can fully utilize the adhesive tape attachment time of the bare cells 13 in the accommodating area 12a located at the corresponding adhesive tape attachment position to perform loading or unloading on the bare cells 13 in the accommodating area 12a located at the auxiliary station 1a, reducing the waiting time of the bare cells 13 for adhesive tape attachment, which is conducive to accelerating the adhesive tape attachment cycle speed of the adhesive tape attaching system 1.

In one embodiment, referring to FIGs. 1, 3, and 4, in the two accommodating areas 12a, one accommodating area 12a is stationary relative to the other accommodating area 12a, and when one accommodating area 12a is located at the corresponding adhesive tape attachment position, the other accommodating area 12a is located at the auxiliary station 1a.

It should be explained that one accommodating area 12a is stationary relative to the other accommodating area 12a, and one accommodating area 12a does not move relative to the other accommodating area 12a.

For example, both accommodating areas 12a can be stationary, and one accommodating area 12a does not move relative to the other accommodating area 12a.

For example, when one accommodating area 12a moves, the other accommodating area 12a follows and moves together, and one accommodating area 12a does not move relative to the other accommodating area 12a.

For example, a pair of bare cells 13 welded to the adapting piece 132 are placed in the accommodating area 12a located at the auxiliary station 1a to achieve loading of the accommodating area 12a located at the auxiliary station 1a, after loading, the accommodating area 12a located at the auxiliary station 1a follows the traversing mechanism 12 to move along the first direction to the first adhesive tape attachment position 11a1, and the accommodating area 12a located at the second adhesive tape attachment position 11a2 also moves to the auxiliary station 1a following the movement of the accommodating area 12a moving from the auxiliary station 1a to the first adhesive tape attachment position 11a1. Another pair of bare cells 13 are placed in the accommodating area 12a to utilize the adhesive tape attachment time of the pair of bare cells 13 in the accommodating area 12a located at the first adhesive tape attachment position 11a1 to load the accommodating area 12a located at the auxiliary station 1a again.

The adhesive tape attaching assembly 11 completes the adhesive tape attachment action on the pair of bare cells 13 in the accommodating area 12a located at the first adhesive tape attachment position 11a1, and also loads the accommodating area 12a located at the auxiliary station 1a again, then the two accommodating areas 12a synchronously follow the traversing mechanism 12 to move along the first direction again, the accommodating area 12a located at the auxiliary station 1a follows the traversing mechanism 12 to move to the second adhesive tape attachment position 11a2, the accommodating area 12a located at the first adhesive tape attachment position 11a1 also moves to the auxiliary station 1a following the movement of the accommodating area 12a moving from the auxiliary station 1a to the second adhesive tape attachment position 11a2, the pair of bare cells 13 that have been subjected to adhesive tape attachment are removed to achieve unloading of the accommodating area 12a located at the auxiliary station 1a, and loading is performed again in the accommodating area 12a located at the auxiliary station 1a. This process continues in a repetitive cycle. While the pair of bare cells 13 in the accommodating area 12a located at the corresponding adhesive tape attachment position are subjected to adhesive tape attachment, loading or unloading may be performed on the accommodating area 12a located at the auxiliary station 1a to fully utilize the waiting time of the bare cells 13 for adhesive tape attachment.

In the embodiment of the present disclosure, one accommodating area 12a can move synchronously with the other accommodating area 12a. When a pair of bare cells 13 in one accommodating area 12a move to the corresponding adhesive tape attachment position for adhesive tape attachment, the other accommodating area 12a can also synchronously move to the auxiliary station 1a for loading or unloading, further reducing the waiting time of the bare cells 13 for adhesive tape attachment, which is conducive to accelerating the adhesive tape attachment cycle speed of the adhesive tape attaching system 1.

It can be understood that the movement relationship between one accommodating area 12a and the other accommodating area 12a in the two accommodating areas 12a is not limited. For example, one accommodating area 12a moves relative to the other accommodating area 12a, and after one accommodating area 12a moves to the corresponding adhesive tape attachment position, the other accommodating area 12a can move to the auxiliary station 1a, and the two accommodating areas 12a are not relatively stationary.

In one embodiment, referring to FIG. 5, the adhesive tape attaching system 1 further includes a detection assembly 14, the detection assembly 14 is located along the first direction between the first adhesive tape attachment position and the second adhesive tape attachment position, and the detection assembly 14 is configured to detect the bare cells 13 in the accommodating area 12a located at the auxiliary station 1a.

For example, the detection assembly 14 may include an image acquisition device. For example, the image acquisition device may be a camera, a video camera, or the like.

For example, the camera may be a CCD (Charge Coupled Device, Charge Coupled Device) camera.

In the embodiment of the present disclosure, after the accommodating area 12a located at the auxiliary station 1a is loaded, the detection assembly 14 can detect the pair of bare cells 13 and reject unqualified bare cells 13. After the detection result of the bare cells 13 is qualified, adhesive tape attachment is performed on the bare cells 13, avoiding waste of adhesive tape attachment time and adhesive tape resources, which is conducive to improving adhesive tape attachment efficiency.

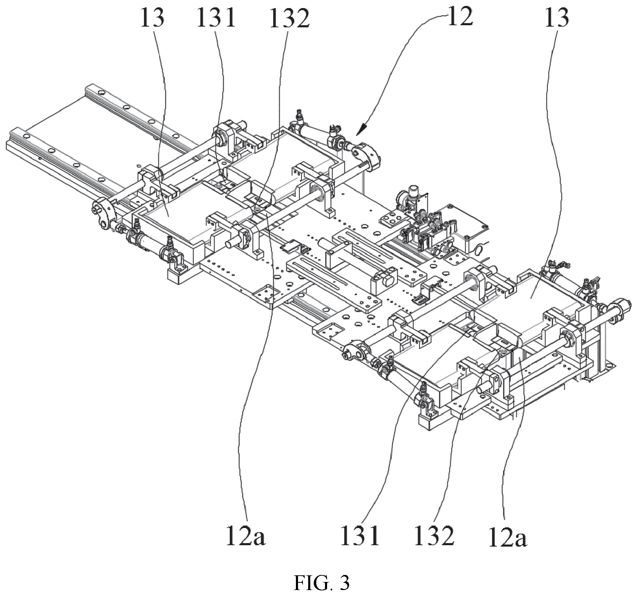

In one embodiment, referring to FIGs. 3 to 5, the detection assembly 14 has a detection portion 141, the traversing mechanism 12 has an avoidance hole 12b communicating with the corresponding accommodating area 12a, the detection portion 141 is located below the avoidance hole 12b, a projection area along a vertical direction of the avoidance hole 12b corresponding to the accommodating area 12a located at the auxiliary station 1a is a first area, a projection area along the vertical direction of the detection portion 141 is a second area, and the second area is located within the first area, so that the detection portion 141 can detect a welding state of the adapting piece 132 through the avoidance hole 12b corresponding to the accommodating area 12a located at the auxiliary station 1a.

For example, the detection portion 141 may include a lens. For example, the lens may be a lens of a camera, a video camera, or the like.

For example, the auxiliary station 1a includes two sub-stations, each sub-station is correspondingly provided with a detection assembly 14, one accommodating area 12a switches between the first adhesive tape attachment position 11a1 and one sub-station, and the other accommodating area 12a switches between the second adhesive tape attachment position 11a2 and the other sub-station.

For example, the auxiliary station 1a is a sub-station, one accommodating area 12a switches between the first adhesive tape attachment position 11a1 and the sub-station, and the other accommodating area 12a switches between the second adhesive tape attachment position 11a2 and the sub-station.

In the embodiment of the present disclosure, since the adapting piece 132 is located below the tab 131 of the bare cell 13 and a thickness of the adapting piece 132 is thicker than a thickness of the tab 131 of the bare cell 13, if the thicker adapting piece 132 can be successfully welded through the thinner tab 131, it can be determined that the welding quality between the adapting piece 132 and the tab 131 is qualified. Therefore, the detection portion 141 only needs to be located below the avoidance hole 12b and can detect the welding state below the adapting piece 132 through the avoidance hole 12b, so as to determine whether the welding quality of the bare cell 13 is qualified, without providing the detection portion 141 above the adapting piece 132, which is conducive to improving detection efficiency and saving internal space of the adhesive tape attaching system 1.

It can be understood that the position arrangement and number of the detection assembly 14 are not limited. For example, detection assemblies 14 are arranged above and below the avoidance hole 12b communicating with the accommodating area 12a located at the auxiliary station 1a.

It can be understood that the detection assembly 14 of the embodiment of the present disclosure is not limited to detecting the welding state. For example, the detection assembly 14 can also detect whether a bare cell 13 is placed in the accommodating area 12a.

For example, the detection assembly 14 may include a photoelectric sensor for detecting whether a bare cell 13 is placed in the accommodating area 12a.

In one embodiment, referring to FIG. 4, the adhesive tape attaching assembly 11 has a first adhesive tape preparation position 11b1 and a second adhesive tape preparation position 11b2, the first adhesive tape preparation position 11b1 and the second adhesive tape preparation position 11b2 are respectively used for acquiring adhesive tapes with different directions of adhesion sides, an arrangement direction of the first adhesive tape preparation position 11b1 and the second adhesive tape preparation position 11b2 is a second direction, and the adhesive tape attachment position is located along the second direction between the corresponding first adhesive tape preparation position 11b1 and the corresponding second adhesive tape preparation position 11b2.

It should be noted that the direction shown by R2 in FIG. 4 is the second direction.

For example, the direction of the adhesion side of the first adhesive tape preparation position 11b1 is downward, and the adhesive tape acquired at the first adhesive tape preparation position 11b1 is used for attaching above the bare cell 13.

For example, the direction of the adhesion side of the second adhesive tape preparation position 11b2 is upward, the adhesive tape acquired at the second adhesive tape preparation position 11b2 is used for attaching below the bare cell 13, and the adhesive tape acquired at the second adhesive tape preparation position 11b2 is spanned across the bare cell 13 and the adapting piece 132.

In the embodiment of the present disclosure, during the process of adhesive tape attachment on a pair of bare cells 13 in the accommodating area 12a located at the adhesive tape attachment position, the first adhesive tape preparation position 11b1 and the second adhesive tape preparation position 11b2 corresponding to the accommodating area 12a located at the auxiliary station 1a can acquire adhesive tapes with different directions of adhesion sides. The acquisition of an adhesive tape with one adhesion side direction at the first adhesive tape preparation position 11b1 and the acquisition of an adhesive tape with another direction at the second adhesive tape preparation position 11b2 do not interfere with each other, which is conducive to improving adhesive tape preparation efficiency.

For example, one accommodating area 12a is moved to the auxiliary station 1a, a pair of bare cells 13 welded to the adapting piece 132 are placed in the accommodating area 12a located at the auxiliary station 1a to achieve loading of the accommodating area 12a located at the auxiliary station 1a, the detection portion 141 detects a welding state of the adapting piece 132 through the avoidance hole 12b, after qualification, the accommodating area 12a located at the auxiliary station 1a follows the traversing mechanism 12 to move along the first direction to the first adhesive tape attachment position 11a1 for adhesive tape attachment, the accommodating area 12a located at the second adhesive tape attachment position 11a2 moves to the auxiliary station 1a following the movement of the accommodating area 12a moving from the auxiliary station 1a to the first adhesive tape attachment position 11a1, another pair of bare cells 13 welded to the adapting piece 132 are placed in the accommodating area 12a located at the auxiliary station 1a, the detection portion 141 detects the welding state of the adapting piece 132 through the avoidance hole 12b, after qualification, adhesive tape preparation is performed on the first adhesive tape preparation position 11b1 and the second adhesive tape preparation position 11b2 corresponding to the accommodating area 12a located at the auxiliary station 1a.

When the bare cells 13 in the accommodating area 12a located at the first adhesive tape attachment position 11a1 complete the adhesive tape attachment action, the first adhesive tape preparation position 11b1 and the second adhesive tape preparation position 11b2 corresponding to the accommodating area 12a located at the auxiliary station 1a also complete the adhesive tape preparation action, the accommodating area 12a located at the auxiliary station 1a follows the traversing mechanism 12 to move along the first direction to the second adhesive tape attachment position 11a2 for adhesive tape attachment, the accommodating area 12a located at the first adhesive tape attachment position 11a1 moves to the auxiliary station 1a following the movement of the accommodating area 12a moving from the auxiliary station 1a to the second adhesive tape attachment position 11a2, the pair of bare cells 13 that have been subjected to adhesive tape attachment are removed, loading is performed again in the accommodating area 12a located at the auxiliary station 1a, the detection portion 141 detects the welding state of the adapting piece 132 through the avoidance hole 12b, and after qualification, adhesive tape preparation is performed on the first adhesive tape preparation position 11b1 and the second adhesive tape preparation position 11b2 corresponding to the accommodating area 12a located at the auxiliary station 1a. This process continues in a repetitive cycle. While a pair of bare cells 13 are subjected to adhesive tape attachment, another pair of bare cells 13 to be attached can be detected and subjected to adhesive tape preparation, fully utilizing the waiting time before the next bare cell 13 undergoes adhesive tape attachment.

It can be understood that the positional relationship between the first direction and the second direction is not limited. For example, the first direction is perpendicular to the second direction.

In one embodiment, referring to FIGs. 1 to 5, two adhesive tape attaching assemblies 11 are provided, the two adhesive tape attaching assemblies 11 are arranged opposite to each other, and the auxiliary station 1a and one traversing mechanism 12 are both located between the two adhesive tape attaching assemblies 11.

In the embodiment of the present disclosure, a traversing mechanism 12 is provided in the two adhesive tape attaching assemblies 11. One accommodating area 12a is located at the adhesive tape attachment position for adhesive tape attachment, the other accommodating area 12a is located at the auxiliary station 1a for loading and unloading, and adhesive tape preparation is performed at the first adhesive tape preparation position 11b1 and the second adhesive tape preparation position 11b2 corresponding to the accommodating area 12a located at the auxiliary station 1a, all without mutual interference. This allows the loading or unloading of the accommodating area 12a located at the auxiliary station 1a. Additionally, the adhesive tape preparation at the first adhesive tape preparation position 11b1 and the second adhesive tape preparation position 11b2 corresponding to the accommodating area 12a located at the auxiliary station 1a fully utilizes the adhesive tape attachment time of the pair of bare cells 13 in the accommodating area 12a located at the adhesive tape attachment position, which is conducive to accelerating the adhesive tape attachment cycle speed of the adhesive tape attaching system 1.

For example, one auxiliary station 1a is provided between the two adhesive tape attaching assemblies 11, the auxiliary station 1a includes two sub-stations, one accommodating area 12a is located at the first adhesive tape attachment position 11a1 for adhesive tape attachment, and the other accommodating area 12a is located at a sub-station of the auxiliary station 1a close to the second adhesive tape attachment position 11a2 for loading and unloading.

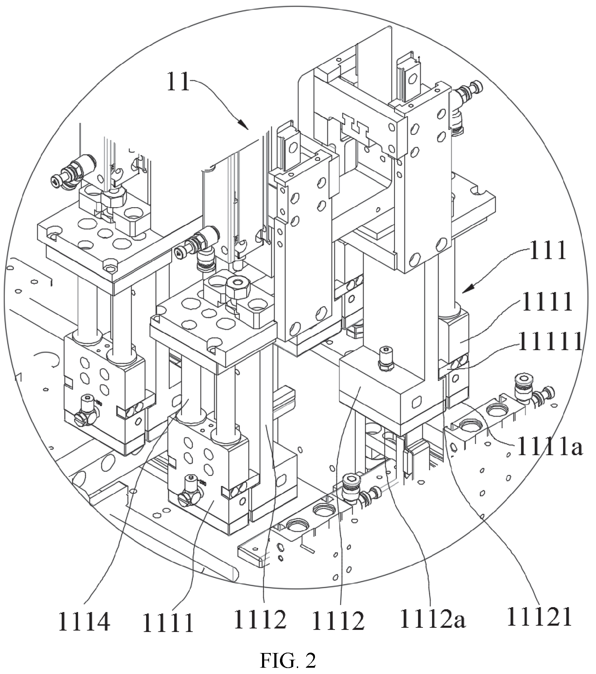

In one embodiment, referring to FIGs. 1 and 2, the adhesive tape attaching assembly 11 includes an adhesive tape attaching apparatus 111, the adhesive tape attaching apparatus 111 includes a first adhesive tape attaching member 1111, a second adhesive tape attaching member 1112, a guide shaft, and an elastic member 1114, one of the first adhesive tape attaching member 1111 and the second adhesive tape attaching member 1112 is connected to the guide shaft, the other of the first adhesive tape attaching member 1111 and the second adhesive tape attaching member 1112 is movably provided on the guide shaft, the elastic member 1114 is sleeved on the guide shaft, and the elastic member 1114 is in contact with the first adhesive tape attaching member 1111 and the second adhesive tape attaching member 1112, respectively.

For example, a shape of a cross section of the second adhesive tape attaching member 1112 parallel to the second direction is Z-shaped.

For example, when the adhesive tape attaching apparatus 111 moves downward to attach an adhesive tape to the tab 131, the first adhesive tape attaching member 1111 abuts against a side of the bare cell 13 close to the tab 131, the elastic member 1114 is compressed so that the first adhesive tape attaching member 1111 is tightly attached above the side of the bare cell 13 close to the tab 131 and cannot continue to move downward, the second adhesive tape attaching member 1112 continues to move downward and extends into an avoidance groove enclosed by the tab 131 and the side of the bare cell 13 close to the tab 131 to attach an adhesive tape to the tab 131, finally making a shape of a cross section of the adhesive tape parallel to the second direction Z-shaped, fully covering the tab 131 with the adhesive tape to improve bonding strength of the adhesive tape at the tab 131.

After adhesive tape attachment is completed, the adhesive tape attaching apparatus 111 moves upward, the elastic member 1114 extends, the second adhesive tape attaching member 1112 moves upward under an elastic restoring force of the elastic member 1114, and when the first adhesive tape attaching member 1111 leaves the bare cell 13, the adhesive tape attaching apparatus 111 restores an initial state.

For example, the adhesive tape attaching assembly 11 includes two adhesive tape attaching apparatuses 111, and adhesive tape attaching apparatuses 111 are provided on both upper and lower sides of the accommodating area 12a.

In the embodiment of the present disclosure, one end of the guide shaft is connected to a lower bottom surface of a top of the second adhesive tape attaching member 1112, and another end is connected to an upper top surface of the first adhesive tape attaching member 1111, and the elastic member 1114 is sleeved outside the guide shaft, so that the first adhesive tape attaching member 1111 can move along an axial direction of the guide shaft, ensuring that the adhesive tape can be completely and densely attached to the tab 131 and the side of the bare cell 13 close to the tab 131.

For example, the adhesive tape attaching assembly 11 includes a frame and a driving assembly 112. The adhesive tape attaching apparatus 111 is provided on the frame, so that the adhesive tape attaching apparatus 111 can move along the frame between the adhesive tape attachment position and the adhesive tape preparation position. The driving assembly 112 is provided between the frame and the adhesive tape attaching apparatus 111, and the driving assembly 112 drives the adhesive tape attaching apparatus 111 to attach an adhesive tape to a pair of bare cells 13 in the corresponding accommodating area 12a.

For example, referring to FIG. 1, the driving assembly 112 includes a first driving member 1121 and a second driving member 1122, where the second driving member 1122 is mounted on the first driving member 1121, the first driving member 1121 drives the second driving member 1122 to move along the second direction, and the second driving member 1122 drives the adhesive tape attaching apparatus 111 to move along a vertical direction to attach an adhesive tape to the bare cell 13.

For example, the first driving member 1121 is a linear module, and the first driving member 1121 drives the second driving member 1122 to move in a straight line.

For example, referring to FIG. 1, each adhesive tape attaching assembly 11 is provided with two driving assemblies 112, one driving assembly 112 is located above the other driving assembly 112, the driving assembly 112 located above is configured to drive the upper adhesive tape attaching apparatus 111 to attach an adhesive tape to an upper part of the bare cell 13, and the driving assembly 112 located below is configured to drive the lower adhesive tape attaching apparatus 111 to attach an adhesive tape to a lower part of the bare cell 13.

In one embodiment, referring to FIG. 2, the first adhesive tape attaching member 1111 has a first limiting portion 11111 and a first adhesive tape pressing surface 1111a for pressing the adhesive tape, the second adhesive tape attaching member 1112 has a second limiting portion 11121 and a second adhesive tape pressing surface 1112a for pressing the adhesive tape, the first limiting portion 11111 is configured to abut against the second limiting portion 11121 to limit movement of the first adhesive tape attaching member 1111 and the second adhesive tape attaching member 1112 under an elastic force of the elastic member 1114, and when the first limiting portion 11111 and the second limiting portion 11121 abut against each other, the first adhesive tape pressing surface 1111a and the second adhesive tape pressing surface 1112a are flush with each other.

In the embodiment of the present disclosure, the first adhesive tape pressing surface 1111a and the second adhesive tape pressing surface 1112a are flush with each other, so that the adhesive tape can be flatly adsorbed on the adhesive tape attaching apparatus 111, which is conducive to reducing difficulty in adhesive tape suction of the adhesive tape attaching apparatus 111 at the corresponding adhesive tape preparation position.

It can be understood that the positional relationship between the first adhesive tape pressing surface 1111a and the second adhesive tape pressing surface 1112a is not limited. For example, the first adhesive tape pressing surface 1111a and the second adhesive tape pressing surface 1112a may not be on the same horizontal plane.

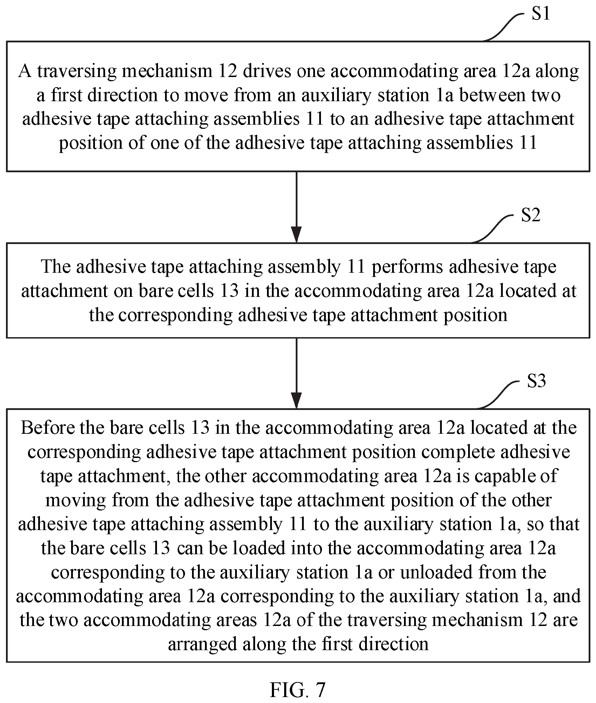

An embodiment of the present disclosure further provides an adhesive tape attaching method, referring to FIG. 7, the adhesive tape attaching method including:
Step S1: A traversing mechanism 12 drives one accommodating area 12a along a first direction to move from an auxiliary station 1a between two adhesive tape attaching assemblies 11 to an adhesive tape attachment position of one of the adhesive tape attaching assemblies 11.

Step S2: The adhesive tape attaching assembly 11 performs adhesive tape attachment on bare cells 13 in the accommodating area 12a located at the corresponding adhesive tape attachment position.

Step S3: Before the bare cells 13 in the accommodating area 12a located at the corresponding adhesive tape attachment position complete adhesive tape attachment, the other accommodating area 12a is capable of moving from the adhesive tape attachment position of the other adhesive tape attaching assembly 11 to the auxiliary station 1a, so that the bare cells 13 can be loaded into the accommodating area 12a corresponding to the auxiliary station 1a or unloaded from the accommodating area 12a corresponding to the auxiliary station 1a, and the two accommodating areas 12a of the traversing mechanism 12 are arranged along the first direction.

It can be understood that the movement relationship between one accommodating area 12a and the other accommodating area 12a in the two accommodating areas 12a is not limited.

For example, the two accommodating areas 12a can move relative to each other, one accommodating area 12a moves from the auxiliary station 1a to the corresponding adhesive tape attachment position, and before the bare cells 13 in the accommodating area 12a located at the corresponding adhesive tape attachment position complete adhesive tape attachment, the other accommodating area 12a is driven by the traversing mechanism 12 along the first direction to move from the adhesive tape attachment position of the other adhesive tape attaching assembly 11 to the auxiliary station 1a.

For example, the two accommodating areas 12a can also be relatively stationary, and the two accommodating areas 12a are not relatively movable. When one accommodating area 12a is driven by the traversing mechanism 12 along the first direction to move from the auxiliary station 1a to the adhesive tape attachment position of one of the adhesive tape attaching assemblies 11, the other accommodating area 12a is immediately driven by the traversing mechanism 12 to move from the corresponding adhesive tape attachment position to the auxiliary station 1a.

In the adhesive tape attaching method provided by the embodiment of the present disclosure, when the two accommodating areas 12a are switched between the adhesive tape attachment position and the auxiliary station 1a, so that when one accommodating area 12a is located at the corresponding adhesive tape attachment position, the other accommodating area 12a is located at the auxiliary station 1a, which can fully utilize the adhesive tape attachment time of the bare cells 13 in the accommodating area 12a located at the corresponding adhesive tape attachment position to perform loading or unloading on the bare cells 13 in the accommodating area 12a located at the auxiliary station 1a, which is conducive to accelerating the adhesive tape attachment cycle speed of the adhesive tape attaching assembly 11.

The control method of the embodiment of the present disclosure will be described in detail below in conjunction with specific embodiments.

In one embodiment, the adhesive tape attaching assembly 11 includes an adhesive tape attaching apparatus 111, and the adhesive tape attaching method further includes:
Step S4: Perform adhesive tape preparation on the adhesive tape attaching apparatus 111 of the adhesive tape attaching assembly 11 corresponding to the other accommodating area 12a when one of the accommodating areas 12a is located at the corresponding adhesive tape attachment position.

In the embodiment of the present disclosure, the traversing mechanism 12 is moved to move one accommodating area 12a to the corresponding adhesive tape attachment position, the corresponding adhesive tape attaching apparatus 111 also moves to the corresponding adhesive tape attachment position, the other accommodating area 12a moves to the auxiliary station 1a, and the corresponding adhesive tape attaching apparatus 111 moves to the corresponding adhesive tape preparation position for adhesive tape preparation. This enables the adhesive tape attaching system 1 to fully utilize the adhesive tape attachment time of a pair of bare cells 13 to perform adhesive tape preparation for another pair of bare cells 13, which is conducive to accelerating the adhesive tape attachment cycle speed of the adhesive tape attaching system 1.

In one embodiment, an adapting piece 132 corresponding to the bare cells 13 in the accommodating area 12a is detected by a detection assembly 14, and the adhesive tape attaching method further includes:
Step S5: The detection assembly 14 detects the adapting piece 132 corresponding to the bare cells 13 in the accommodating area 12a located at the auxiliary station 1a when one of the accommodating areas 12a is located at the corresponding adhesive tape attachment position.

In the embodiment of the present disclosure, the traversing mechanism 12 is moved to move one accommodating area 12a to the corresponding adhesive tape attachment position, the corresponding adhesive tape attaching apparatus 111 also moves to the corresponding adhesive tape attachment position, the other accommodating area 12a moves to the auxiliary station 1a, and the detection assembly 14 detects the bare cells 13 in the accommodating area 12a located at the auxiliary station 1a. Subsequent adhesive tape attachment steps are performed based on the detection result, avoiding waste of adhesive tape resources and adhesive tape attachment time.

In one embodiment, the detection assembly 14 has a detection portion 141, and the traversing mechanism 12 has an avoidance hole 12b, and the step that the detection assembly 14 detects the adapting piece 132 corresponding to the bare cells 13 in the accommodating area 12a located at the auxiliary station 1a when one of the accommodating areas 12a is located at the corresponding adhesive tape attachment position includes:
Step S51: The detection portion 141 detects through the avoidance hole 12b a welding state of the adapting piece 132 in the accommodating area 12a located at the auxiliary station 1a when one of the accommodating areas 12a is located at the corresponding adhesive tape attachment position.

For example, the detection portion 141 may include a lens. For example, the lens can be a lens of a camera, a video camera, or the like.

In the embodiment of the present disclosure, a pair of bare cells 13 are placed in the accommodating area 12a located at the auxiliary station 1a, the detection portion 141 detects a weld seam of the adapting piece 132 through the avoidance hole 12b, and then determines whether to reject the pair of bare cells 13 according to the quality of the weld seam of the adapting piece 132.

An embodiment of the present disclosure further provides a battery production line, including the adhesive tape attaching system 1 according to any one of the foregoing embodiments, a loading mechanism, and an unloading mechanism.

In the embodiment of the present disclosure, the loading mechanism is configured to place a pair of welded bare cells 13 into the accommodating area 12a at the auxiliary station 1a, and the unloading mechanism is configured to remove a pair of bare cells 13 that have completed adhesive tape attachment from the accommodating area 12a at the auxiliary station 1a, which is conducive to improving the production efficiency of a battery.

The foregoing descriptions are merely specific embodiments of the present disclosure and are not intended to limit the present disclosure. Persons skilled in the art understand that the present disclosure may have various modifications and variations. Any modifications, equivalent replacements, and improvements made without departing from the spirit and principle of the present disclosure shall fall within the protection scope of the present disclosure.

## Claims

1. An adhesive tape attaching system having an auxiliary station for loading and unloading, wherein the adhesive tape attaching system comprises:
an adhesive tape attaching assembly having an adhesive tape attachment position for adhesive tape attachment, wherein at least two adhesive tape attaching assemblies are provided, wherein:
an arrangement direction of adhesive tape attachment positions of the adhesive tape attaching assemblies is a first direction; and
the auxiliary station is provided between at least two adjacent adhesive tape attaching assemblies, and among two adjacent adhesive tape attaching assemblies corresponding to the auxiliary station, the adhesive tape attachment position of one adhesive tape attaching assembly is a first adhesive tape attachment position, and the adhesive tape attachment position of the other adhesive tape attaching assembly is a second adhesive tape attachment position; and
a traversing mechanism having two accommodating areas arranged along the first direction, wherein the accommodating areas are used for placing bare cells to be attached, and the traversing mechanism is configured to move along the first direction to drive one of the accommodating areas to switch between the first adhesive tape attachment position and the auxiliary station, and to drive the other accommodating area to switch between the second adhesive tape attachment position and the auxiliary station.

2. The adhesive tape attaching system according to claim 1, wherein in the two accommodating areas, one accommodating area is stationary relative to the other accommodating area, and when one accommodating area is located at a corresponding adhesive tape attachment position, the other accommodating area is located at the auxiliary station.

3. The adhesive tape attaching system according to claim 1 or 2, further comprising a detection assembly, wherein the detection assembly is located along the first direction between the first adhesive tape attachment position and the second adhesive tape attachment position, and is configured to detect the bare cells in the accommodating area located at the auxiliary station.

4. The adhesive tape attaching system according to claim 3, wherein the detection assembly has a detection portion, and the traversing mechanism has an avoidance hole communicating with the corresponding accommodating area, the detection portion being located below the avoidance hole, wherein:
a projection area along a vertical direction of the avoidance hole corresponding to the accommodating area located at the auxiliary station is a first area, and a projection area along the vertical direction of the detection portion is a second area, wherein the second area is located within the first area, so that the detection portion is able to detect a welding state of an adapting piece through the avoidance hole corresponding to the accommodating area located at the auxiliary station.

5. The adhesive tape attaching system according to claim 4, wherein two detection portions are provided, and the two detection portions are arranged along a direction intersecting with the first direction.

6. The adhesive tape attaching system according to any one of claims 3 to 5, wherein the detection assembly comprises a photoelectric sensor and/or an image acquisition device configured to detect the bare cells in the accommodating area.

7. The adhesive tape attaching system according to any one of claims 1 to 6, wherein the adhesive tape attaching assembly has a first adhesive tape preparation position and a second adhesive tape preparation position, wherein:
the first adhesive tape preparation position and the second adhesive tape preparation position are respectively used for acquiring adhesive tapes with different directions of adhesion sides; and
an arrangement direction of the first adhesive tape preparation position and the second adhesive tape preparation position is a second direction, and the adhesive tape attachment position is located along the second direction between the corresponding first adhesive tape preparation position and the corresponding second adhesive tape preparation position.

8. The adhesive tape attaching system according to claim 7, wherein two adhesive tape attaching assemblies are provided, wherein the two adhesive tape attaching assemblies are arranged opposite to each other, and the auxiliary station and one traversing mechanism are both located between the two adhesive tape attaching assemblies.

9. The adhesive tape attaching system according to any one of claims 1 to 8, wherein the adhesive tape attaching assembly comprises an adhesive tape attaching apparatus, wherein the adhesive tape attaching apparatus comprises a first adhesive tape attaching member, a second adhesive tape attaching member, a guide shaft, and an elastic member, wherein:
one of the first adhesive tape attaching member and the second adhesive tape attaching member is connected to the guide shaft, and the other of the first adhesive tape attaching member and the second adhesive tape attaching member is movably provided on the guide shaft; and
the elastic member is sleeved on the guide shaft, and the elastic member is in contact with the first adhesive tape attaching member and the second adhesive tape attaching member.

10. The adhesive tape attaching system according to claim 9, wherein two adhesive tape attaching apparatuses are provided, and the adhesive tape attaching apparatuses are provided on both upper and lower sides of the accommodating area.

11. The adhesive tape attaching system according to claim 9 or 10, wherein the adhesive tape attaching assembly further comprises a frame and a driving assembly, wherein:
the adhesive tape attaching apparatus is provided on the frame; and
the driving assembly is provided between the frame and the adhesive tape attaching apparatus, and is configured to drive the adhesive tape attaching apparatus to attach an adhesive tape to a pair of bare cells in the corresponding accommodating area.

12. The adhesive tape attaching system according to claim 11, wherein the driving assembly comprises a first driving member and a second driving member, wherein:
the second driving member is mounted on the first driving member;
the first driving member is configured to drive the second driving member to move along a direction intersecting with the first direction; and
the second driving member is configured to drive the adhesive tape attaching apparatus to move along a vertical direction to attach an adhesive tape to the bare cell.

13. The adhesive tape attaching system according to claim 12, wherein the first driving member is a linear module configured to drive the second driving member to move linearly.

14. The adhesive tape attaching system according to any one of claims 9 to 13, wherein the first adhesive tape attaching member has a first limiting portion and a first adhesive tape pressing surface for pressing the adhesive tape, and the second adhesive tape attaching member has a second limiting portion and a second adhesive tape pressing surface for pressing the adhesive tape, wherein:
the first limiting portion is configured to abut against the second limiting portion to limit movement of the first adhesive tape attaching member and the second adhesive tape attaching member under an elastic force of the elastic member, and when the first limiting portion and the second limiting portion abut against each other, the first adhesive tape pressing surface and the second adhesive tape pressing surface are flush with each other.

15. An adhesive tape attaching method, comprising:
driving, by a traversing mechanism, one accommodating area along a first direction to move from an auxiliary station between two adhesive tape attaching assemblies to an adhesive tape attachment position of one of the adhesive tape attaching assemblies, wherein the first direction is an arrangement direction of adhesive tape attachment positions of a plurality of the adhesive tape attaching assemblies;
performing, by the adhesive tape attaching assembly, adhesive tape attachment on bare cells in the accommodating area located at a corresponding adhesive tape attachment position; and
before the bare cells in the accommodating area located at the corresponding adhesive tape attachment position complete adhesive tape attachment, the other accommodating area is capable of moving from the adhesive tape attachment position of the other adhesive tape attaching assembly to the auxiliary station, so that the bare cells are able to be loaded into the accommodating area corresponding to the auxiliary station or unloaded from the accommodating area corresponding to the auxiliary station, and the two accommodating areas of the traversing mechanism are arranged along the first direction.

16. The adhesive tape attaching method according to claim 15, wherein the adhesive tape attaching assembly comprises an adhesive tape attaching apparatus, and the adhesive tape attaching method further comprises:
performing adhesive tape preparation on the adhesive tape attaching apparatus of the adhesive tape attaching assembly corresponding to the other accommodating area when one of the accommodating areas is located at the corresponding adhesive tape attachment position.

17. The adhesive tape attaching method according to claim 15, wherein an adapting piece corresponding to the bare cells in the accommodating area is detected by a detection assembly, and the adhesive tape attaching method further comprises:
detecting, by the detection assembly, the adapting piece corresponding to the bare cells in the accommodating area located at the auxiliary station when one of the accommodating areas is located at the corresponding adhesive tape attachment position.

18. The adhesive tape attaching method according to claim 17, wherein:
the detection assembly has a detection portion, and the traversing mechanism has an avoidance hole; and
the detecting, by the detection assembly, the adapting piece corresponding to the bare cells in the accommodating area located at the auxiliary station when one of the accommodating areas is located at the corresponding adhesive tape attachment position comprises:
detecting, by the detection portion through the avoidance hole, a welding state of the adapting piece in the accommodating area located at the auxiliary station when one of the accommodating areas is located at the corresponding adhesive tape attachment position.

19. The adhesive tape attaching method according to claim 15, wherein in the two accommodating areas, one accommodating area is stationary relative to the other accommodating area, and when one accommodating area is located at the corresponding adhesive tape attachment position, the other accommodating area is located at the auxiliary station.

20. A battery production line, comprising:
the adhesive tape attaching system according to any one of claims 1 to 14;
a loading mechanism, configured to place welded bare cells and an adapting piece into an accommodating area at an auxiliary station; and
an unloading mechanism, configured to remove the bare cells and the adapting piece that have completed adhesive tape attachment from the accommodating area at the auxiliary station.
